(19) Europäisches Patentamt
European Patent Office
Office européen des brevets

(11) **EP 2 093 129 B1**

(12) **EUROPEAN PATENT SPECIFICATION**

(45) Date of publication and mention
of the grant of the patent:
**22.01.2014 Bulletin 2014/04**

(51) Int Cl.:
**B62D 15/02** *(2006.01)*

(21) Application number: **09153022.0**

(22) Date of filing: **17.02.2009**

(54) **Parking assist apparatus and method**

Vorrichtung und Verfahren zur Einparkunterstützung

Appareil et procédé d'assistance au stationnement

(84) Designated Contracting States:
**DE FR GB**

(30) Priority: **19.02.2008 JP 2008037480**

(43) Date of publication of application:
**26.08.2009 Bulletin 2009/35**

(73) Proprietor: **TOYOTA JIDOSHA KABUSHIKI KAISHA**
**Toyota-shi, Aichi-ken, 471-8571 (JP)**

(72) Inventors:
• **Kawabata, Yukiko**
**c/o TOYOTA JIDOSHA KABUSHIKI KAISHA**
**Toyota-shi,**
**Aichi-ken 471-8571, (JP)**

• **Makino, Yasushi**
**c/o TOYOTA JIDOSHA KABUSHIKI KAISHA**
**Toyota-shi,**
**Aichi-ken 471-8571, (JP)**

• **Endo, Tomohiko**
**c/o TOYOTA JIDOSHA KABUSHIKI KAISHA**
**Toyota-shi,**
**Aichi-ken 471-8571, (JP)**

(74) Representative: **TBK**
**Bavariaring 4-6**
**80336 München (DE)**

(56) References cited:
**WO-A1-2007/006604      JP-A- 2007 290 557**

## Description

BACKGROUND OF THE INVENTION

1. Field of the Invention

The invention relates to a parking assist apparatus and a parking assist method for assisting operation for parking a vehicle in a target parking space.

2. Description of the Related Art

Japanese Patent Application Publication No. 2003-270344 (JP-A-2003-270344) describes a parking assist apparatus for assisting perpendicular reverse-drive parking operation of a vehicle. This parking assist apparatus has: distance-detecting means for detecting the distance from the subject vehicle to a target object; parking-space detecting means for detecting a parking space in which the subject vehicle can be parked; target-object side-face detecting means for detecting the side face of an object that is substantially parallel to the side face of the subject vehicle when the subject vehicle is parked in the parking space; and parking orientation setting means for setting a target orientation of the subject vehicle in the parking space based on the result of detection by the target-object side-face detecting means.

According to the parking assist apparatus of JP-A-2003-270344, the orientation of other parked vehicle is detected using an ultrasonic sensor, and the orientation of the parking space is determined based on the detected orientation of the parked vehicle. In this case, the orientation of the parking space can be detected before the subject vehicle reaches the position at which the parking operation of the subject vehicle starts, and therefore this method provides, for example, an advantage that the parking assist operation can be started earlier than it is in a case where the orientation of the parking space is determined through an image recognition process on an image that is captured by a rear camera when the subject vehicle is at the parking-start position. However, in the case where the orientation of the parking space is detected by detecting other parked vehicle using an ultrasonic sensor, if the orientation of the parked vehicle cannot be accurately detected, the orientation of the parking space cannot be accurately detected, and therefore the target parking angle may fail to be set precisely.

Japanese Patent Application Publication No. 2007-290557 (JP-A-2007-290557), the closest prior art, discloses a parking support device and a parking support method, whereby the parking support device for supporting the parking includes: obstacles detecting means for detecting an obstacle around a vehicle and parking frame line detecting means for detecting a parking frame line drawn on the ground, wherein the target parking position is computed from the detected parking frame line, when the parking frame line is detected by the frame line detecting means.

SUMMARY OF THE INVENTION

The invention provides a parking assist apparatus and a parking assist method that set the target parking angle of the subject vehicle accurately, as described in independent claims 1, 8 and 9.

The first aspect of the invention relates to a parking assist apparatus for assisting operation for parking a subject vehicle in a parking space, having: image-capturing means for capturing an image of a view on a side of the subject vehicle; parking-line image recognizing means for recognizing the direction of a parking line indicating the parking space by processing the image captured by the image-capturing means; and target parking angle setting means for setting a target parking angle of the subject vehicle, which represents a target orientation of the subject vehicle in the parking space, based on the direction of the parking line recognized by the parking-line image recognizing means.

The above-described parking assist apparatus further comprises parked-vehicle image recognizing means for recognizing the direction of a side face or a front face of a vehicle parked beside the parking space by processing the image captured by the image-capturing means. In this case, if the direction of any parking line is not recognized by the parking-line image recognizing means, the target parking angle setting means may set the target parking angle of the subject vehicle based on the direction of the side face or front face of the parked vehicle that has been recognized by the parked-vehicle image recognizing means.

Further, the above-described parking assist apparatus is such that, if the direction of any parking line is not recognized by the parking-line image recognizing means and the direction of a side face or front face of any parked vehicle is not recognized by the parked-vehicle image recognizing means, the target parking angle setting means sets the target parking angle of the subject vehicle based on the orientation of the subject vehicle when the subject vehicle previously stopped near the parking space.

The above-described parking assist apparatus may further have distance-data obtaining means for obtaining data indicative of the distance from a plurality of points on a side face or front face of a vehicle parked beside the parking space to the subject vehicle, or if the direction of any parking line is not detected by the parking-line image recognizing means and the direction of the side face or front face of any parked vehicle is not detected by the parked-vehicle image recognizing means, the target parking angle setting means sets the target parking angle of the subject vehicle based on the direction of the front face or side face of a parked vehicle that is calculated based on the distance data obtained by the distance-data obtaining means.

Further, the above-described parking assist apparatus may be such that the image captured by the image-capturing means is an image captured when the subject vehicle passes through an area on a side of or in front of a vehicle parked before the parking space as viewed in the traveling direction of the subject vehicle.

The second aspect of the invention relates to a parking assist apparatus for assisting operation for parking a subject vehicle in a parking space, having: image processing means for processing an image captured by a side camera that captures an image of a view on a side of the subject vehicle; first target parking angle setting means for, if the direction of a parking line indicating the parking space has been recognized through the image processing by the image processing means, setting a target parking angle of the subject vehicle, which represents a target orientation of the subject vehicle in the parking space, based on the direction of the recognized parking line; second target parking angle setting means for, if the direction of any parking line has not been recognized but the direction of a side face or front face of a vehicle parked beside the parking space has been recognized through the image processing by the image-processing means, setting the target parking angle of the subject vehicle based on the recognized direction of the side face or front face of the parked vehicle; and third target parking angle setting means for, if neither of the direction of any parking line nor the direction of the side face or front face of any parked vehicle has been recognized through the image processing by the image-processing means, setting the target parking angle of the subject vehicle based on the orientation of the subject vehicle when the subject vehicle previously stopped near the parking space.

The third aspect of the invention relates to a parking assist method for assisting operation for parking a subject vehicle in a parking space, having: processing an image captured by a side camera that captures an image of a view on a side of the subject vehicle; setting, if the direction of a parking line indicating the parking space has been recognized through the image processing, a target parking angle of the subject vehicle, which represents a target orientation of the subject vehicle in the parking space, based on the direction of the recognized parking line; setting, if the direction of any parking line has not been recognized but the direction of a side face or front face of a vehicle parked beside the parking space has been recognized through the image processing, the target parking angle of the subject vehicle based on the recognized direction of the side face or front face of the parked vehicle; and setting, if neither of the direction of any parking line nor the direction of a side face or front face of any parked vehicle has been recognized through the image processing, setting the target parking angle of the subject vehicle based on the orientation of the subject vehicle when the subject vehicle previously stopped near the parking space.

BRIEF DESCRIPTION OF THE DRAWINGS

The foregoing and further objects, features and advantages of the invention will become apparent from the following description of example embodiments with reference to the accompanying drawings, wherein like numerals are used to represent like elements and wherein:

FIG. 1 is a view showing the configuration of a parking assist apparatus according to an example embodiment of the invention;
FIG. 2 is a view illustrating how an object (vehicle) is detected using a distance sensor;
FIG. 3 is a flowchart illustrating an example of a target parking angle setting procedure that a parking assist ECU executes upon parallel parking;
FIG. 4 is a view schematically illustrating a case where a parking line of a parking space is present upon parallel parking;
FIG. 5 is a view schematically illustrating a case where a parking line of a parking space is not present upon parallel parking;
FIG. 6 is a view illustrating a process for recognizing a parking line in an image;
FIG 7 is a view illustrating a process for recognizing the side face of a parked vehicle in an image;
FIG. 8 is a flowchart illustrating an example of a target parking angle setting procedure that the parking assist ECU executes upon perpendicular parking;
FIG. 9 is a view schematically illustrating a case where a parking line of a parking space is present upon perpendicular parking;
FIG. 10 is a view illustrating a process for recognizing the front face of a parked vehicle in an image; and
FIG. 11 is a view showing an example of a target parking position setting touch-panel view shown on a display.

DETAILED DESCRIPTION OF THE EMBODIMENTS

Hereinafter, example embodiments of the invention will be described with reference to the accompanying drawings.

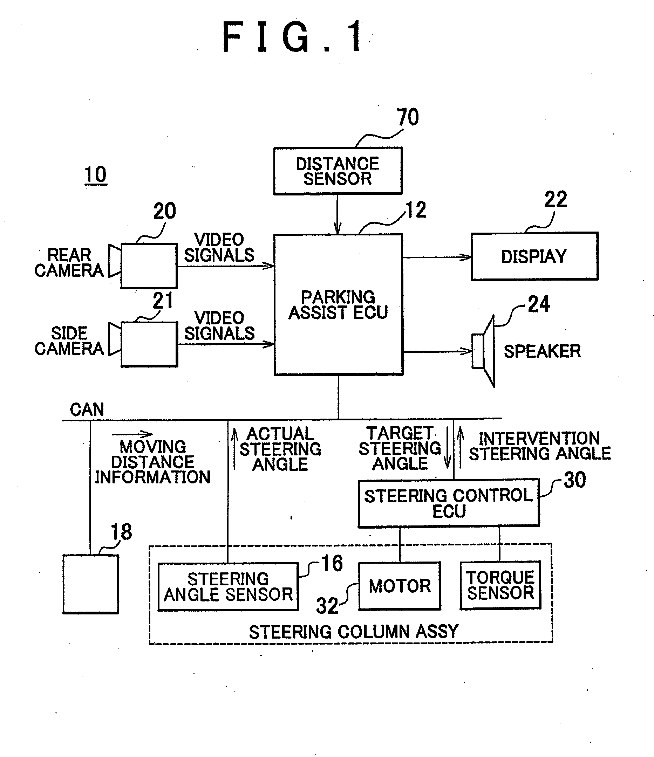

FIG. 1 shows the configuration of a parking assist apparatus 10 according to an example embodiment of the invention. Referring to FIG. 1, the parking assist apparatus 10 incorporates an electronic control unit 12 (will hereinafter be referred to as "parking assist ECU 12") as its main component. The parking assist ECU 12 is a microcomputer constituted of a CPU (Central Processing Unit), a ROM (Read Only Memory), a RAM (Random Access Memory), and so on, which are all connected to each other via a bus (not shown in the drawings). The ROM stores various programs and data that the CPU executes or uses as needed.
The parking assist ECU 12 is connected to a steering angle sensor 16 and a vehicle speed sensor 18 via a bus that is, for example, CAN (Controller Area Network) or a high-speed communication bus. The steering angle sensor 16 detects the steering angle of a steering wheel (not shown in the drawings) and the vehicle speed sensor 18 detects the vehicle speed. The vehicle speed sensor 18 may be constituted of wheel-speed sensors that are provided at the respective wheels of the vehicle and output pulses corresponding to the speeds of the respective wheels.

Further, the parking assist ECU 12 is connected to a distance sensor 70 that is used to detect the distance to an object (e.g., parked vehicle) using electric waves (e.g., millimeter waves), light waves (e.g., lasers), or the like. The distance sensor 70 may be, for example, a laser radar, a millimeter-wave radar, an ultrasonic-wave radar, or a stereovision. That is, the distance sensor 70 may be any sensor that is able to detect the distance to an object. The distance sensor 70 is constituted of sensors provided at the right and left sides of the front portion of the vehicle, respectively.

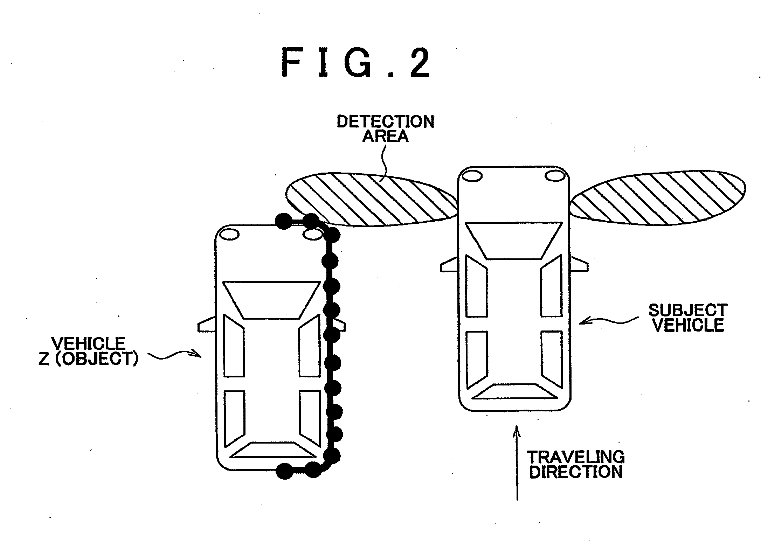

Referring to FIG. 2, the distance sensor 70 emits sound waves, or the like, in predetermined directions, mainly in the lateral direction of the vehicle, and then it detects the distance to each object present in the lateral direction of the vehicle based on the reflection waves received. For example, the distance sensor 70 may be arranged near the front bumper of the vehicle and emit sound waves, or the like, diagonally forward at an angle of 17 to 20 degrees with respect to the lateral direction of the vehicle. The distance sensor 70 may be adapted to output a sequentially compact set of the reflection points of the object (i.e., a set of reflection points of sound waves, or the like).

The parking assist ECU 12 is connected to a rear camera 20 that captures a view in a predetermined angle range in the rear of the vehicle, side cameras 21 that capture views in predetermined angle ranges on the respective sides of the vehicle, a display 22 provided in the passenger compartment, and a speaker 24 provided in the passenger compartment as well. For example, the rear camera 20 may be mounted in a trunk lid, and the side camera 21 may be mounted in the left and right side-mirrors, respectively. Cameras for capturing views in blind spots may be used as the side cameras 21 if appropriate. The rear camera 20 and the side cameras 21 may be cameras incorporating CCD, CMOS, or the like, as an imaging device, and a wide-angle lens for capturing a relatively wide view image.

Further, the parking assist ECU 12 is connected to a steering control ECU 30 that controls a motor 32 of a power steering apparatus, and so on. The steering control ECU 30 is connected to a torque sensor and the motor 32. The motor 32 may be provided in the steering column, the steering gearbox, or the like, to turn the steering shaft.

Next, the features of a target parking angle setting procedure that is executed by the parking assist ECU 12 will be described with reference to two cases, that is, parallel parking and perpendicular parking. Note that "perpendicular parking" refers to cases where the vehicle is backed into a parking space such that the vehicle will be directed substantially perpendicular to the present orientation of the vehicle, that is, the direction of the road.

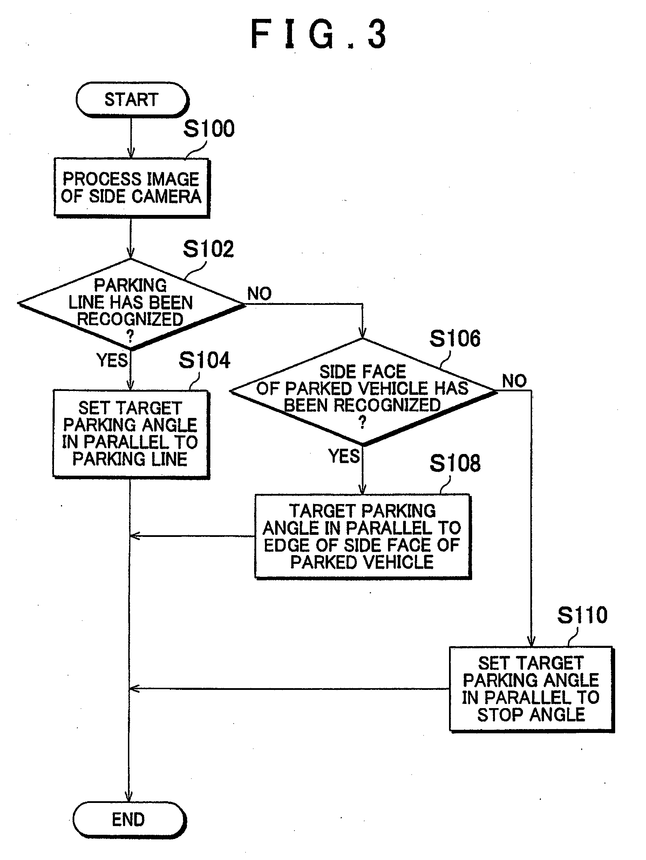

First, the features of the target parking angle setting procedure that is executed by the parking assist ECU 12 upon parallel parking will be described with reference to FIG 3 to FIG. 7.

The flowchart of FIG 3 illustrates one example of the target parking angle setting procedure executed by the parking assist ECU 12 upon parallel parking. The target parking angle corresponds to the target orientation of the subject vehicle at the end of the parking process (will be referred to as "parking orientation"), and this angle may either be defined as an absolute angle or an angle relative to a reference direction. For example, the target parking angle may be an angle with respect to the present orientation of the subject vehicle.

In step 100, the parking assist ECU 12 performs image processing on an image captured by the side camera 21 (side camera image). That is, the parking assist ECU 12 executes a process for recognizing a line indicating a parking space (will hereinafter be referred to as "parking line"), or the like, in the image. The parking line is normally present between the parking space and the subject vehicle.

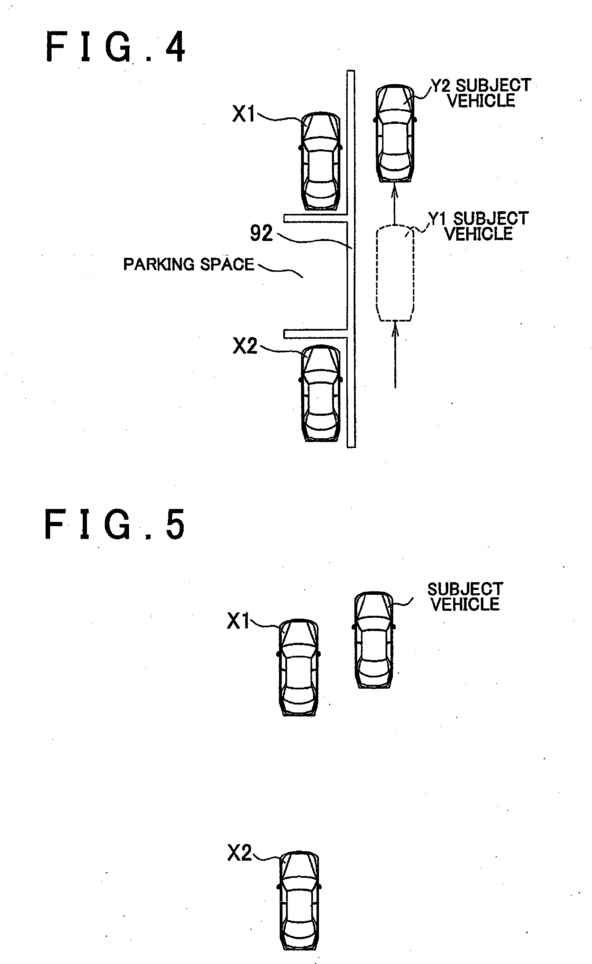

In step 102, the parking assist ECU 12 determines whether the parking line has been recognized in the image in the image recognition process of step 100. Here, it is assumed that the parking line 92 on the entrance side of the parking space shown in FIG. 4 is the parking line to be recognized. If the parking line 92 has been recognized, the parking assist ECU 12 proceeds to step 104. If not, the parking assist ECU 12 proceeds to step 106. Typical cases where any parking line is not recognized include a case where any parking lines are not present in the parking lot and a case where parking lines are not recognizable due to the environmental brightness condition, the road surface state, and so on.

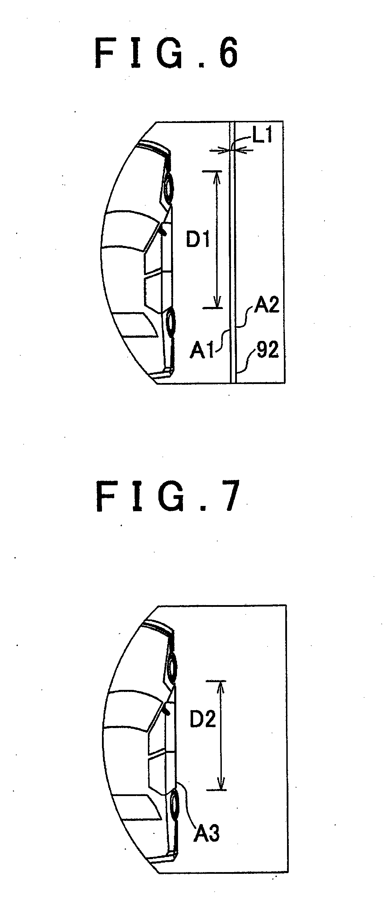

Any appropriate methods may be used for the above-described parking-line image reorganization. An example of such methods is described below with reference to FIG. 6. Referring to FIG. 6, in this example, first, feature points are extracted from the image of the side camera 21. The feature points are points where the difference in brightness from adjacent points is higher than a threshold. That is, the parking assist ECU 12 extracts, from the image, an outline (edge) having a largely different brightness from adjacent portions. Then, the parking assist ECU 12 performs distortional correction, converting each pixel data on a camera coordinate system (two-dimensional coordinate system) into a pixel data on an X-Y-Z coordinate system (three-dimensional coordinate system). Then, the parking assist ECU 12 detects a pair of straight edges A1, A2 that are longer than a predetermined length D1. At this time, if the interval L1 between the edges A1, A2 is equal to a prescribed parking line width, these edges A1, A2 are recognized as a parking line.

In step 104, the parking assist ECU 12 sets the target parking angle in parallel to the recognized parking line. That is, the parking assist ECU 12 sets the target parking angle in parallel to the direction in which the recognized parking line extends, that is, the direction in which the parking space extends.

In step 106, the parking assist ECU 12 determines whether a side face of any parked vehicle has been recognized in the image of the side camera 21 in the image recognition process of step 100. If it has been recognized, the parking assist ECU 12 proceeds to step 108. If not, the parking assist ECU 12 proceeds to step 110. Typical cases where the side face of any parked vehicle is not recognized include, for example, a case where no vehicles are parked beside the parking space and a case where the boundary (edge) between the side face of a parked vehicle and the road is not recognizable due to the environmental brightness condition, the road surface state, and so on.

Any appropriate methods may be used to recognize the side face of a parked vehicle in this image. An example of such methods will be described with reference to FIG 7. In this example, first, the feature points are extracted from the image captured by the side camera 21. The feature points are points where the brightness is higher than a threshold. Then, the parking assist ECU 12 performs distortional correction, converting each pixel data on a camera coordinate system into a pixel data on an X-Y-Z coordinate system. These processes are identical to those of the above-described parking line image recognition method. Then, an edge A3 that is longer than a predetermined length D2 (<D1) is detected. At this time, if there are no other edges running in parallel to the edge A3, the edge A3 is recognized as an edge of the side face of a parked vehicle.

In step 108, the parking assist ECU 12 sets the target parking angle in parallel to the direction in which the recognized vehicle side face edge extends, that is, the direction in which the parking space extends. In other words, the parking assist ECU 12 sets the target parking angle in parallel to the orientation of the parked vehicle recognized in the image. The direction the recognized vehicle side face edge extends may be the direction of a straight line obtained through straight-line approximation of the edge of the side face of the parked vehicle. Alternatively, the parking assist ECU 12 may determine the orientation of the parked vehicle through curve approximation of the edge of the side face of the parked vehicle, and then set the target parking angle in parallel to the determined orientation of the parked vehicle.

In step 110, the parking assist ECU 12 sets the target parking angle in parallel to "stop angle" that is an angle representing the orientation of the subject vehicle when it stopped the last time. For example, in a case where the subject vehicle temporarily stops at the position Y1 in FIG. 4 (i.e., the position beside the target parking space) and then proceeds to the position Y2 at which the parking motion of the subject vehicle starts (the initial position of the reverse drive for parking), the parking assist ECU 12 determines that the orientation of the subject vehicle at the parking-start position Y2 was parallel to the orientation of the subject vehicle at the position Y1, and the parking assist ECU 12 sets the target parking angle in parallel to the orientation of the subject vehicle at the position Y1. Note that, in step 110, the orientation of the parking space may be calculated using the method described in Japanese Patent Application Publication No. 2007-290555 (JP-A-2007-290555) and the target parking angle of the subject vehicle may be set in parallel to the calculated orientation of the parking space.

According to the target parking angle setting procedure of FIG. 3, as such, the orientation of the parking space is accurately detected by processing the image captured by the side camera 21 (side camera image) and then recognizing the direction of the parking line in the image, and the target parking angle of the subject vehicle is set in parallel to the recognized direction of the parking line. Thus, the set target parking angle of the subject vehicle precisely matches the actual orientation of the parking space. Further, even if any parking line can be not recognized, the side face of a parked vehicle is recognized in the image of the side camera 21, and the target parking angle is set in parallel to the recognized side face of the parked vehicle. In this case, too, the set target parking angle precisely matches the actual orientation of the parking space.

The target parking angle setting procedure of FIG. 3 may be executed as needed in various parking assist controls according to their purposes, and so on.

For example, in a case where any parking assist operation is not performed until the subject vehicle reaches the parking start position, the target parking angle setting procedure of FIG. 3 may be started after the subject vehicle reaches the parking start position. In this case, the image processed in step 100 may either be an image captured when the subjected vehicle is at the parking start position or an image captured when the subject vehicle is within a predetermined distance (e.g., 7 m) before the parking start position (i.e., a recoded image). Further, two or more images captured at different positions may be used.

On the other hand, in a case where parking assist operation is performed when the subject vehicle moves to the parking start position, the target parking angle setting procedure of FIG. 3 is executed before the subject vehicle reaches the parking start position. For example, the target parking angle setting procedure may be executed when it is detected that the driver intends to start parking the subject vehicle. The driver's parking intention can be confirmed based on, for example, the fact that a parking assist switch provided in the passenger compartment has been manually turned on, the fact that the information from a navigation system is indicating that the subject vehicle is presently in a parking lot and moving at a low speed, and the fact that the subject vehicle has stopped beside the parking space (e.g., the position Y1 shown in FIG. 4). In any of these cases, in the image processed in step 100 may be an image captured at the time the driver's parking intension is detected, an image (images) captured in real time after the driver's parking intension has been detected, or an image captured before the driver's parking intension is detected (recorded image). Although the image processed in step 100 may be either of the vehicle X1 or the vehicle X2 beside the parking space (Refer to FIG. 4), an image of the vehicle X2 that is located before the target parking space as viewed in the traveling direction of the subject vehicle is preferably used in step 100. By doing so, the parking assist operation for the target parking space can be performed earlier.

Although the target parking angle setting procedure of FIG. 3 is executed without using the distance sensor 70, it may be executed using the distance sensor 70. For example, in step 106 and step 108, the direction of the side face of the parked vehicle may be calculated based on a point sequence data constituted of the reflection points on the side face of the parked vehicle detected by the distance sensor 70, and the target parking angle of the subject vehicle may be set in parallel to the direction of the side face of the parked vehicle. Alternatively, instead of step 110, the direction of the side face of the parked vehicle may be calculated based on a point sequence data constituted of reflection points on the side face of the parked vehicle detected by the distance sensor 70, and the target parking angle of the subject vehicle may be set in parallel to the direction of the side face of the parked vehicle. The target parking angle setting procedure of FIG. 3 may be started when a parking space is detected by the distance sensor 70. In this case, the parking line of the parking space detected by the distance sensor 70 and the side faces of the parked vehicles X1 and/or X2 beside said parking space (see FIG 4, for example) are recognized in the image recognition process described above. At this time, if the image of the vehicle X2 located before the parking space as viewed in the traveling direction of the subject vehicle is used, the parking assist operation for this parking space can be started earlier. Note that the above-described parking space detection may be performed using the method described in Japanese Patent Application Publication No. 2007-290556 (JP-A-2007-290556).

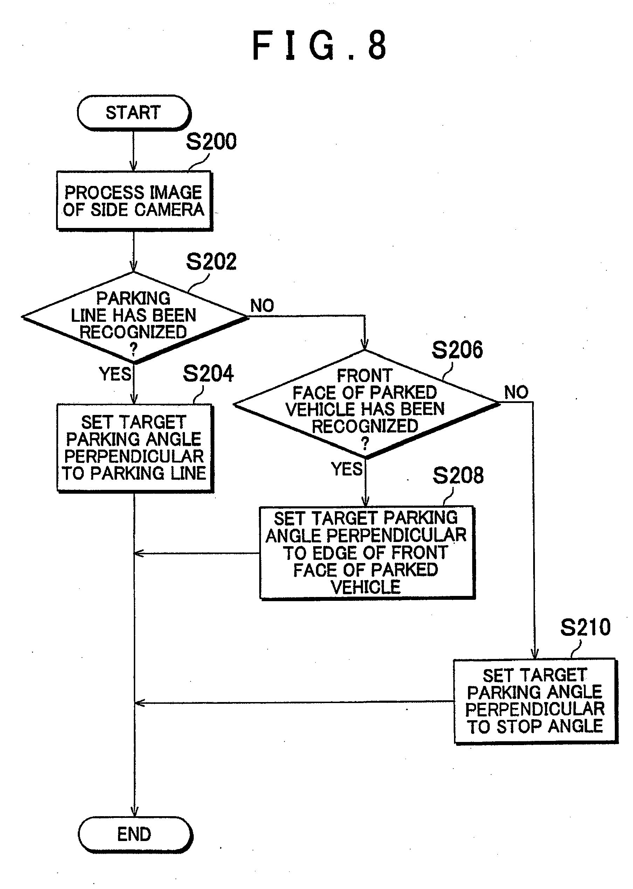

Next, the features of the target parking angle setting procedure that is executed by the parking assist ECU 12 upon perpendicular parking will be described with reference to FIG 8 to FIG. 10.

The flowchart of FIG 8 illustrates one example of the target parking angle setting procedure that is executed by the parking assist ECU 12 upon perpendicular parking.

In step 200, the parking assist ECU 12, the parking assist ECU 12 performs image processing on an image captured by the side camera 21 (side camera image). That is, the parking assist ECU 12 executes a process for recognizing a parking line, or the like, in the image.

In step 202, the parking assist ECU 12 determines whether any parking line has been recognized in the image in step 200. In this example, it is assumed that the parking line 92 on the entrance side of the parking space shown in FIG. 4 is recognized. If the parking line 92 has been recognized, the parking assist ECU 12 proceeds to step 204. If not, the parking assist ECU 12 proceeds to step 206. Typical cases where any parking line is not recognized include a case where any parking lines are not present in the parking lot and a case where parking lines are not recognizable due to the environmental brightness condition, the road surface state, and so on. While any appropriate methods may be implemented for the above-described parking line image reorganization, the method used to recognize the parking line 92 in the foregoing parallel parking example or a similar method may be used.

In step 204, the parking assist ECU 12 sets the target parking angle of the subject vehicle perpendicular to the recognized parking line. More specifically, the parking assist ECU 12 sets the target parking angle perpendicular to the direction in which the recognized parking line extends, that is, the direction in which the parking space extends.

In step 206, the parking assist ECU 12 determines whether the front face of any parked vehicle has been recognized in the image captured by the side camera 21 in the image recognition process of step 200. If any front face has been recognized, the parking assist ECU 12 proceeds to step 208. If not, the parking assist ECU 12 proceeds to step 210. Typical cases where the front face of any parked vehicle is not recognized include, for example, a case where no vehicles are parked beside the parking space and a case where the boundary (edge) between the front face of a parked vehicle and the road is not recognizable due to the environmental brightness condition, the road surface state, and so on.

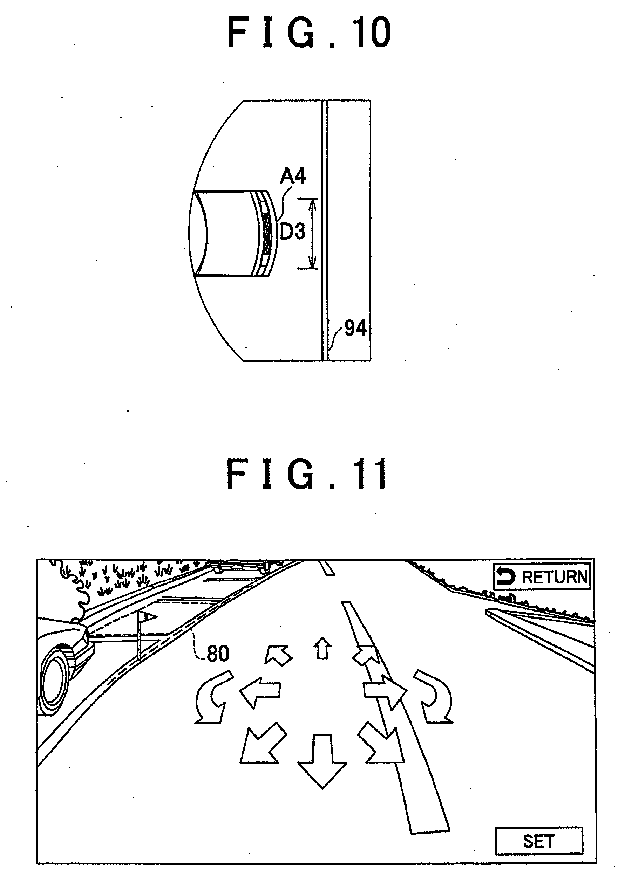

Any appropriate methods may be used to recognize the front face of a parked vehicle in the image. An example of such methods will be described with reference to FIG 10. In this example, first, feature points are extracted from the image captured by the side camera 21. The feature points are points where the difference in brightness from adjacent points is higher than a threshold. Then, the parking assist ECU 12 performs distortional correction, converting each pixel data on a camera coordinate system into a pixel data on an X-Y-Z coordinate system. Then, an edge A4 that is longer than a predetermined distance D3 (<D2) is detected. At this time, if there are no other edges running in parallel to the edge A4, the edge A4 is recognized as an edge of the front face of the parked vehicle.

In step 208, the parking assist ECU 12 sets the target parking angle of the subject vehicle perpendicular to the direction in which the recognized vehicle front face edge extends, that is, the parking assist ECU 12 sets the target parking angle of the subject vehicle in parallel to the direction in which the parking space extends. The direction in which the recognized vehicle front face edge extends may be the direction of a straight line obtained through straight-line approximation of the edge of the front face of the parked vehicle. Alternatively, the parking assist ECU 12 may determine the orientation of the parked vehicle through curve approximation of an edge of the front face of the parked vehicle and then set the target parking angle of the subject vehicle in parallel to the determined orientation of the parked vehicle.

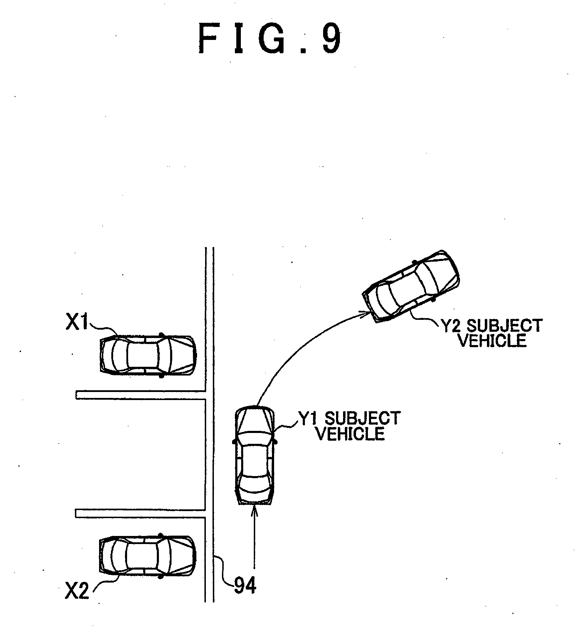

In step 210, the parking assist ECU 12 sets the target parking angle of the subject vehicle perpendicular to "stop angle" that is an angle representing the orientation of the subject vehicle when it stopped the last time. For example, in a case where the subject vehicle temporarily stops at the position Y1 in FIG. 9 (i.e., the position beside the target parking space) and then proceeds to the position Y2 at which the parking motion of the subject vehicle starts, the parking assist ECU 12 sets the target parking angle perpendicular to the orientation of the subject vehicle at the position Y1. Note that, in step 210, the orientation of the parking space may be calculated using the method described in Japanese Patent Application Publication No. 2007-290555 (JP-A-2007-290555) and the target parking angle may be set in parallel to the calculated orientation of the parking space.

According to the target parking angle setting procedure of FIG. 8, as such, the orientation of the parking space is accurately detected by processing the image captured by the side camera 21 (side camera image) and then recognizing the direction of the parking line in the image, and the target parking angle of the subject vehicle is set perpendicular to the recognized direction of the parking line. Thus, the set target parking angle of the subject vehicle precisely matches the actual orientation of the parking space. Further, even if any parking line cannot be recognized, the front face of a parked vehicle is recognized in the image of the side camera 21, and the target parking angle of the subject vehicle is set in perpendicular to the recognized front face of the parked vehicle. In this case, too, the set target parking angle precisely matches the actual orientation of the parking space.

The target parking angle setting procedure of FIG. 8 may be executed as needed in various parking assist controls according to their purposes, for example.

For example, in a case where any parking assist operation is not performed until the subject vehicle reaches the parking start position, the target parking angle setting procedure of FIG. 8 may be started after the subject vehicle reaches the parking start position. At this time, the image processed in step 200 may be an image captured when the subject vehicle is within a predetermined distance (e.g., 7 m) before the parking start position (i.e., a recoded image), or an image (i.e. a recorded image) captured at the position whether the subject vehicle stopped the last time (vehicle position Y1 in FIG. 9), or an image (i.e., a recorded image) captured when the vehicle starts being steered away from the parking space. Further, two or more images captured at different positions may be used.

On the other hand, in a case where parking assist operation is performed when the subject vehicle moves to the parking start position, the target parking angle setting procedure of FIG. 8 is executed before the subject vehicle reaches the parking start position. For example, the target parking angle setting procedure may be executed when it is detected that the driver intends to start parking the subject vehicle. The driver's parking intention can be confirmed based on, for example, the fact that a parking assist switch provided in the passenger compartment has been manually turned on, the fact that the information from a navigation system is indicating that the subject vehicle is presently in a parking lot and moving at a low speed, and the fact that the subject vehicle has stopped beside the parking space (e.g., the position Y1 shown in FIG 9). In any of these cases, in the image processed in step 200 may be an image captured at the time the driver's parking intension is detected, an image (images) captured in real time after the driver's parking intension has been detected, or an image captured before the driver's parking intension is detected (recorded image). Although the image processed in step 200 may be either of the vehicle X1 or the vehicle X2 beside the parking space (Refer to FIG 9, for example), an image of the vehicle X2 that is located before the target parking space as viewed in the traveling direction of the subject vehicle is preferably used in step 200. By doing so, the parking assist operation for the target parking space can be performed earlier. Further, the parked vehicle X1 is unable to be captured as the subject vehicle is steered away from the parking space. In view of this, too, it is preferable to use the image of the parked vehicle X2 especially upon perpendicular parking.

Although the target parking angle setting procedure of FIG. 8 is executed without using the distance sensor 70, it may be executed using the distance sensor 70 as needed. For example, in step 206 and step 208, the direction of the front face of the parked vehicle may be calculated based on point sequence data constituted of the reflection points on the front face of the parked vehicle detected by the distance sensor 70, and the target parking angle may be set perpendicular to the direction of the front face of the parked vehicle. Alternatively, instead of step 210, the direction of the front face of the parked vehicle may be calculated based on point sequence data constituted of reflection points on the front face of the parked vehicle, and the target parking angle may be set perpendicular to the direction of the front face of the parked vehicle. The target parking angle setting procedure of FIG. 8 may be started when a parking space is detected by the distance sensor 70. In this case, the parking line of the parking space detected by the distance sensor 70 and the front faces of the parked vehicles X1 and/or X2 beside said parking space (see FIG. 9, for example) are recognized in the image recognition process described above. At this time, if the image of the vehicle X2 located before the parking space as viewed in the traveling direction of the subject vehicle is used, the parking assist operation for this parking space can be started earlier. Note that the above-described parking space detection may be performed using the method described in Japanese Patent Application Publication No. 2007-290556 (JP-A-2007-290556).

Next, examples of parking assist operation that are performed using the target parking angle set as described above upon parallel parking and perpendicular parking will be described.

For example, the parking assist ECU 12 sets the target parking angle as described above before the subject vehicle reaches the parking start position, and then the parking assist ECU 12 controls, via the steering control ECU 30, the steering operation of the subject vehicle based on the set target parking angle such that the subject vehicle stops at the parking start position at an angle suitable for its parking motion to the parking space. More specifically, upon parallel parking, the parking assist ECU 12 performs steering control using the steering control ECU 30 such that the orientation of the subject vehicle becomes parallel to the target parking angle. Further, for example, the parking assist ECU 12 may indicate a steering guidance message on the display 22 or produce a steering guidance audio message using the speaker 24 so that the orientation of the subject vehicle is made parallel to the target parking angle. On the other hand, upon perpendicular parking, the parking assist ECU 12 determines a target orientation of the subject vehicle that enables the subject vehicle to properly trace a target path to the parking space during reverse drive thereof, and then the parking assist ECU 12 performs steering control using the steering control ECU 30 or output an advisory audio message and/or an advisory visual message such that the subject vehicle can be set in the determined target orientation. In the example described above, because the target parking angle of the subject vehicle can be accurately set in the manner described above, the subject vehicle can be properly guided to the parking start position.

Further, after setting the target parking angle in the manner described above, the parking assist ECU 12 may assist, based on the set target parking angle, the user in setting (correcting) the target parking position. More specifically, when the subject vehicle is at the parking start position, the parking assist ECU 12 indicates the image (actual image) captured by the rear camera 20, which is arranged to capture a rear view of the subject vehicle in a range of a predetermined angle, on the display 22 provided in the passenger compartment. At this time, a target parking frame 80 is overlaid on the image of the display 22 as in an example shown in FIG. 11 (an example of parallel parking). The target parking frame 80 may be a figure indicating an outline of a parking space or an outline of a vehicle. In this case, for example, the position and orientation of the target parking frame 80 are set so as to be visible to the user. Further, two types of parking frames 80 may be used for perpendicular parking and parallel parking, respectively. The orientation (angle) of the target parking frame shown in the display 22 corresponds to the target parking angle, and the orientation of the target parking frame in the initial view in the display 22 corresponds to the target parking angle set as described above. The orientation of the target parking frame 80 may be finally set when the user presses a final setting button, or the like. Alternatively, the direction of the target parking frame 80 may be adjusted (corrected) using touch panel buttons for translating the target parking frame 80 in all directions and turning the target parking frame 80 and then finally set using the final setting button. According to this example embodiment, because the target parking angle of the subject vehicle can be accurately set as described above, the user can adjust (correct) the target parking angle very easily.

Further, after setting and correcting the target parking angle as described above, the parking assist ECU 12 may determine a target orientation of the subject vehicle that enables the subject vehicle to properly trace a target path to the parking space during reverse drive thereof, and then the parking assist ECU 12 may perform steering control using the steering control ECU 30 or produce an advisory audio message and/or an advisory visual message based on the determined target orientation.

Meanwhile, in order to perform the foregoing parking assist operations, it is necessary to monitor changes of the orientation of the subject vehicle after the target parking angle has been set as described above. Thus, the parking assist ECU 12 calculates the amount of change of the orientation of the subject vehicle based on the output signals of the steering angle sensor 16 and the vehicle speed sensor 18 (will hereinafter be referred to as "orientation-change angle $\alpha$"). Note that the orientation-change angle $\alpha$ is positive in the clockwise direction and negative in the counterclockwise direction. For example, the orientation-change angle $\alpha$ can be calculated by the equation (1) indicated below:

$$\alpha = \int_{-\beta}^{0} \gamma \cdot ds \quad \cdots \quad (1)$$

where "ds" represents a slight movement distance of the subject vehicle and "$\gamma$" represents the road curvature (i.e., an inverse of the turning radius R of the subject vehicle). According to this equation, the orientation-change angle $\alpha$ is obtained as a change of the orientation of the subject vehicle that has been caused by the subject vehicle moving $\beta$ m (in this example, the distance from the position at which the target parking angle of the subject vehicle was set or corrected to the present position of the subject vehicle).

Alternatively, the parking assist ECU 12 may calculate the orientation-change angle $\alpha$ using the fol-

lowing equation (2), which is a modified version of the equation (1):

$$\alpha = \sum_{i=1}^{k} \alpha_i \ , \ \alpha_i = \int_{-0.5}^{0} \gamma \cdot ds \ \cdots \ (2)$$

where "$\alpha_i$" represents an angle of slight change of the orientation of the subject vehicle that occurs each time the subject vehicle moves a predetermined unit distance (0.5 m in this example). According to the equation (2), the orientation-change angle $\alpha$ is calculated by summing the slight orientation-change angles $\alpha_{1-k}$.

The unit movement distance of the subject vehicle (0.5 m in this example) is monitored through, for example, time-integration of the output signals of the vehicle speed sensor 18 (wheel speed pulses). The road curvature $\gamma$ is determined based on a steering angle Ha detected by the steering angle sensor 16. For example, it is calculated as $\gamma$ = Ha / L • $\eta$ where "L2" represents the wheelbase of the subject vehicle and "$\eta$" represents the overall gear ratio of the subject vehicle (the ratio of a steering angle Ha to the steered angles of the wheels of the subject vehicle). The slight orientation-change angle $\alpha_i$ may be calculating by multiplying the road curvature $\gamma$ that is determined each time the subject vehicle moves 0.01 m (slight vehicle movement distance) by said distance, that is, 0.01, and then integrating the product until the movement distance of the subject vehicle reaches 0.5 m. The relation between the road curvature $\gamma$ and the turning angle Ha may be formulated as a map based on the correlational data obtained for each vehicle and it may be stored in the ROM of the parking assist ECU 12.

While some embodiments of the invention have been illustrated above, it is to be understood that the invention is not limited to details of the illustrated embodiments, but may be embodied with various changes, modifications or improvements, which may occur to those skilled in the art, without departing from the spirit and scope of the invention.

For example, while the respective image recognition processes are executed by the parking assist ECU 12, said processes may alternatively be executed by, for example, an image processor provided outside of the parking assist ECU 12.

Further, while the process for recognizing the direction of a parking line in the image captured by the side camera 21 and the process for recognizing the side face or front face of the parked vehicle are executed in one procedure.in the foregoing example embodiments, they may be executed otherwise. For example, the process for recognizing the direction of a parking line may be first executed, and then the process for recognizing the side face or front face of the parked vehicle may be executed on the condition that the direction of any parking line has not been recognized in the former process.

A parking assist apparatus for assisting operation for parking a subject vehicle in a parking space has: image-capturing means (21) for capturing an image of a view on a side of the subject vehicle; parking-line image recognizing means for recognizing the direction of a parking line indicating the parking space by processing the image captured by the image-capturing means; and target parking angle setting means for setting a target parking angle of the subject vehicle, which represents a target orientation of the subject vehicle in the parking space, based on the direction of the parking line recognized by the parking-line image recognizing means.

## Claims

1. A parking assist apparatus (10) for assisting operation for parking a subject vehicle in a parking space comprising:

   (a) image-capturing means (21) for capturing an image of a view on a side of the subject vehicle;
   (b) parking-line image recognizing means for recognizing the direction of a parking line indicating the parking space by processing the image captured by the image-capturing means;
   (c) target parking angle setting means for setting a target parking angle of the subject vehicle, which represents a target orientation of the subject vehicle in the parking space, based on the direction of the parking line recognized by the parking-line image recognizing means; and
   (d) parked-vehicle image recognizing means for recognizing the direction of a side face or a front face of a vehicle parked beside the parking space by processing the image captured by the image-capturing means, wherein
   (e) if the direction of any parking line is not recognized by the parking-line image recognizing means, the target parking angle setting means sets the target parking angle of the subject vehicle based on the direction of the side face or front face of the parked vehicle that has been recognized by the parked-vehicle image recognizing means,
   (f) if the direction of any parking line is not recognized by the parking-line image recognizing means and the direction of a side face or front face of any parked vehicle is not recognized by the parked-vehicle image recognizing means, the target parking angle setting means sets the target parking angle of the subject vehicle based on the orientation of the subject vehicle when the subject vehicle previously stopped near the parking space,
   (g) the parking-line image recognizing means is configured to recognize the direction of the parking line by processing the image captured by the image-capturing means before the driver's parking intension is detected, and

(h) the parked-vehicle image recognizing means is configured to recognize the direction of the side face or the front face of the parked vehicle by processing the image captured by the image-capturing means before the driver's parking intension is detected.

2. The parking assist apparatus according to claim 1, further comprising:

distance-data obtaining means (70) for obtaining data indicative of the distance from a plurality of points on a side face or front face of a vehicle parked beside the parking space to the subject vehicle, wherein

if the direction of any parking line is not detected by the parking-line image recognizing means, the target parking angle setting means sets the target parking angle of the subject vehicle based on the direction of the front face or side face of a parked vehicle that is calculated based on the distance data obtained by the distance-data obtaining means.

3. The parking assist apparatus (10) according to claim 1, further comprising:

distance-data obtaining means (70) for obtaining data indicative of the distance from a plurality of points on a side face or front face of a vehicle parked beside the parking space to the subject vehicle, wherein

if the direction of any parking line is not detected by the parking-line image recognizing means and the direction of the side face or front face of any parked vehicle is not detected by the parked-vehicle image recognizing means, the target parking angle setting means sets the target parking angle of the subject vehicle based on the direction of the front face or side face of a parked vehicle that is calculated based on the distance data obtained by the distance-data obtaining means.

4. The parking assist apparatus according to any one of claims 1 to 3, wherein
the image captured by the image-capturing means is an image captured when the subject vehicle passes through an area on a side of or in front of a vehicle parked before the parking space as viewed in the traveling direction of the subject vehicle.

5. The parking assist apparatus according to any one of claims 1 to 4, wherein
upon parallel parking, the target parking angle setting means sets the target parking angle of the subject vehicle substantially in parallel to the direction of the recognized parking line.

6. The parking assist apparatus according to any one of claims 1 to 4, wherein
upon perpendicular parking by reverse drive, the target parking angle setting means sets the target parking angle of the subject vehicle substantially perpendicular to the direction of the recognized parking line.

7. The parking assist apparatus according to any one of claims 1 to 6, wherein
the parking-line image recognizing means extracts, from the image captured by the image-capturing means, edges at which brightness sharply changes, and if the extracted edges include two straight edges that are longer than a predetermined length and the interval between said two edges is substantially equal to a prescribed parking line width, the parking-line image recognizing means determines that the two edges indicate a parking line.

8. A parking assist apparatus (10) for assisting operation for parking a subject vehicle in a parking space comprising:

image processing means for processing an image captured by a side camera (21) that captures an image of a view on a side of the subject vehicle;
first target parking angle setting means for, if the direction of a parking line indicating the parking space has been recognized through the image processing by the image processing means, setting a target parking angle of the subject vehicle, which represents a target orientation of the subject vehicle in the parking space, based on the direction of the recognized parking line;
second target parking angle setting means for, if the direction of any parking line has not been recognized but the direction of a side face or front face of a vehicle parked beside the parking space has been recognized through the image processing by the image-processing means, setting the target parking angle of the subject vehicle based on the recognized direction of the side face or front face of the parked vehicle; and
third target parking angle setting means for, if neither of the direction of any parking line nor the direction of a side face or front face of any parked vehicle has been recognized through the image processing by the image-processing means, setting the target parking angle of the subject vehicle based on the orientation of the subject vehicle when the subject vehicle previously stopped near the parking space.

9. A parking assist method (10) for assisting operation for parking a subject vehicle in a parking space comprising:

processing an image captured by a side camera (21) that captures an image of a view on a side of the subject vehicle;

setting, if the direction of a parking line indicating the parking space has been recognized through the image processing, a target parking angle of the subject vehicle, which represents a target orientation of the subject vehicle in the parking space, based on the direction of the recognized parking line;

setting, if the direction of any parking line has not been recognized but the direction of a side face or front face of a vehicle parked beside the parking space has been recognized through the image processing, the target parking angle of the subject vehicle based on the recognized direction of the side face or front face of the parked vehicle; and

setting, if neither of the direction of any parking line nor the direction of a side face or front face of any parked vehicle has been recognized through the image processing, setting the target parking angle of the subject vehicle based on the orientation of the subject vehicle when the subject vehicle previously stopped near the parking space.

**Patentansprüche**

1. Einparkunterstützungsvorrichtung (10) zur Unterstützung eines Vorgangs zum Einparken eines betreffenden Fahrzeugs in einen Stellplatz, mit:

(a) einer Bildaufnahmeeinrichtung (21) zur Aufnahme eines Bildes einer Ansicht auf einer Seite des betreffenden Fahrzeugs;

(b) einer Parklinien-Bilderkennungseinrichtung zur Erkennung der Ausrichtung einer den Stellplatz anzeigenden Parklinie durch Verarbeitung des durch die Bildaufnahmeeinrichtung aufgenommenen Bildes;

(c) einer Zielparkwinkel-Einstelleinrichtung zur Einstellung eines Zielparkwinkels des betreffenden Fahrzeuges, der eine Zielorientierung des betreffenden Fahrzeuges in dem Stellplatz darstellt, basierend auf der durch die Parklinien-Bilderkennungseinrichtung erkannten Ausrichtung der Parklinie; und

(d) einer Erkennungseinrichtung eines Bildes eines geparkten Fahrzeuges zur Erkennung der Ausrichtung einer Seitenoberfläche oder einer Frontoberfläche eines neben dem Stellplatz geparkten Fahrzeuges durch Verarbeitung des durch die Bildaufnahmeeinrichtung aufgenommenen Bildes, wobei

(e) falls die Ausrichtung irgendeiner Parklinie nicht durch die Parklinien-Bilderkennungseinrichtung erkannt ist, die Zielparkwinkel-Einstelleinrichtung den Zielparkwinkel des betreffenden Fahrzeugs basierend auf der Ausrichtung der Seitenoberfläche oder Frontoberfläche des geparkten Fahrzeugs einstellt, die durch die Erkennungseinrichtung eines Bildes eines geparkten Fahrzeuges erkannt wurde;

(f) falls die Ausrichtung irgendeiner Parklinie nicht durch die Parklinien-Bilderkennungseinrichtung erkannt ist und die Ausrichtung einer Seitenoberfläche oder Frontoberfläche irgendeines geparkten Fahrzeuges nicht durch die Erkennungseinrichtung eines Bildes eines geparkten Fahrzeuges erkannt ist, die Zielparkwinkel-Einstelleinrichtung den Zielparkwinkel des betreffenden Fahrzeuges basierend auf der Orientierung des betreffenden Fahrzeuges einstellt, wenn das betreffende Fahrzeug zuvor nahe dem Stellplatz anhielt,

(g) die Parklinien-Bilderkennungseinrichtung dazu eingerichtet ist, um vor Erfassung einer Parkabsicht des Fahrers die Ausrichtung der Parklinie durch Verarbeitung des durch die Bildaufnahmeeinrichtung aufgenommenen Bildes zu erkennen, und

(h) die Erkennungseinrichtung eines Bildes eines geparkten Fahrzeuges dazu eingerichtet ist, um vor Erfassung einer Parkabsicht des Fahrers die Ausrichtung der Seitenoberfläche oder der Frontoberfläche des geparkten Fahrzeuges durch Verarbeitung des durch die Bildaufnahmeeinrichtung aufgenommenen Bildes zu erkennen.

2. Einparkunterstützungsvorrichtung gemäß Anspruch 1, ferner mit:

einer Entfernungsdaten-Erlangungseinrichtung (70) zur Erlangung von Daten, die die Entfernung von einer Vielzahl von Punkten auf einer Seitenoberfläche oder Frontoberfläche eines neben dem Stellplatz geparkten Fahrzeuges zu dem betreffenden Fahrzeug angeben, wobei falls die Ausrichtung irgendeiner Parklinie nicht durch die Parklinien-Bilderkennungseinrichtung erfasst ist, die Zielparkwinkel-Einstelleinrichtung den Zielparkwinkel des betreffenden Fahrzeugs basierend auf der Ausrichtung der Frontoberfläche oder Seitenoberfläche eines geparkten Fahrzeuges einstellt, die basierend auf den durch die Entfernungsdaten-Erlangungseinrichtung erlangten Entfernungsdaten berechnet ist.

**3.** Einparkunterstützungsvorrichtung (10) gemäß Anspruch 1, ferner mit:

einer Entfernungsdaten-Erlangungseinrichtung (70) zur Erlangung von Daten, die die Entfernung von einer Vielzahl von Punkten auf einer Seitenoberfläche oder Frontoberfläche eines neben dem Stellplatz geparkten Fahrzeuges zu dem betreffenden Fahrzeug angeben, wobei falls die Ausrichtung irgendeiner Parklinie nicht durch die Parklinien-Bilderkennungseinrichtung erfasst ist und die Ausrichtung der Seitenoberfläche oder Frontoberfläche irgendeines geparkten Fahrzeuges nicht durch die Erkennungseinrichtung eines Bildes eines geparkten Fahrzeuges erfasst ist, die Zielparkwinkel-Einstelleinrichtung den Zielparkwinkel des betreffenden Fahrzeuges basierend auf der Ausrichtung der Frontoberfläche oder Seitenoberfläche eines geparkten Fahrzeuges einstellt, die basierend auf den durch die Entfernungsdaten-Erlangungseinrichtung erlangten Entfernungsdaten berechnet ist.

**4.** Einparkunterstützungsvorrichtung gemäß einem der Ansprüche 1 bis 3, wobei das durch die Bildaufnahmeeinrichtung aufgenommene Bild ein Bild ist, das aufgenommen ist, wenn das betreffende Fahrzeug durch einen Bereich an einer Seite oder vor einem Fahrzeug fährt, das bezüglich einer Ansicht in der Fahrtrichtung des betreffenden Fahrzeugs vor dem Stellplatz geparkt ist.

**5.** Einparkunterstützungsvorrichtung gemäß einem der Ansprüche 1 bis 4, wobei beim Parallelparken die Zielparkwinkel-Einstelleinrichtung den Zielparkwinkel des betreffenden Fahrzeuges im Wesentlichen parallel zu der Ausrichtung der erkannten Parklinie einstellt.

**6.** Einparkunterstützungsvorrichtung gemäß einem der Ansprüche 1 bis 4, wobei beim Senkrechtparken durch Rückwärtsfahrt die Zielparkwinkel-Einstelleinrichtung den Zielparkwinkel des betreffenden Fahrzeugs im Wesentlichen senkrecht zu der Ausrichtung der erkannten Parklinie einstellt.

**7.** Einparkunterstützungsvorrichtung gemäß einem der Ansprüche 1 bis 6, wobei die Parklinien-Bilderkennungseinrichtung von dem durch die Bildaufnahmeeinrichtung aufgenommenen Bild Ränder extrahiert, an denen sich eine Helligkeit deutlich ändert, und wobei, falls die extrahierten Ränder zwei gerade Ränder aufweisen, die länger als eine vorbestimmte Länge sind, und der Abstand zwischen den zwei Rändern im Wesentlichen gleich zu einer vorgeschriebenen Parkliniendicke ist, die Parklinien-Bilderkennungseinrichtung bestimmt, dass die zwei Ränder eine Parklinie anzeigen.

**8.** Einparkunterstützungsvorrichtung (10) zur Unterstützung eines Vorgangs zum Einparken eines betreffenden Fahrzeugs in einen Stellplatz, mit:

einer Bildverarbeitungseinrichtung zur Verarbeitung eines Bildes, das durch eine ein Bild einer Ansicht auf einer Seite des betreffenden Fahrzeuges aufnehmenden Seitenkamera (21) aufgenommen ist;
einer ersten Zielparkwinkel-Einstelleinrichtung zur Einstellung eines Zielparkwinkels des betreffenden Fahrzeuges, der eine Zielorientierung des betreffenden Fahrzeuges in dem Stellplatz darstellt, basierend auf der Ausrichtung einer erkannten Parklinie, falls die Ausrichtung der den Stellplatz angebenden Parklinie durch die Bildverarbeitung durch die Bildverarbeitungseinrichtung erkannt wurde;
einer zweiten Zielparkwinkel-Einstelleinrichtung zur Einstellung des Zielparkwinkels des betreffenden Fahrzeuges basierend auf der erkannten Ausrichtung einer Seitenoberfläche oder Frontoberfläche eines geparkten Fahrzeuges, falls die Ausrichtung irgendeiner Parklinie nicht erkannt wurde, aber die Ausrichtung der Seitenoberfläche oder Frontoberfläche des neben dem Stellplatz geparkten Fahrzeuges durch die Bildverarbeitung durch die Bildverarbeitungseinrichtung erkannt wurde; und
einer dritten Zielparkwinkel-Einstelleinrichtung zur Einstellung des Zielparkwinkels des betreffenden Fahrzeuges basierend auf der Orientierung des betreffenden Fahrzeuges, wenn das betreffende Fahrzeug zuvor nahe dem Stellplatz anhielt, falls weder die Ausrichtung irgendeiner Parklinie noch die Ausrichtung einer Seitenoberfläche oder Frontoberfläche irgendeines geparkten Fahrzeuges durch die Bildverarbeitung durch die Bildverarbeitungseinrichtung erkannt wurde.

**9.** Einparkunterstützungsverfahren (10) zum Unterstützen eines Vorgangs zum Einparken eines betreffenden Fahrzeugs in einen Stellplatz, mit:

Verarbeiten eines Bildes, das durch eine ein Bild einer Ansicht auf einer Seite des betreffenden Fahrzeuges aufnehmenden Seitenkamera (21) aufgenommen wird;
Einstellen eines Zielparkwinkels des betreffenden Fahrzeuges, der eine Zielorientierung des betreffenden Fahrzeuges in dem Stellplatz darstellt, basierend auf der Ausrichtung einer erkannten Parklinie, falls die Ausrichtung der den Stellplatz angebenden Parklinie durch die Bildverarbeitung erkannt wurde;

Einstellen des Zielparkwinkels des betreffenden Fahrzeuges basierend auf der erkannten Ausrichtung einer Seitenoberfläche oder Frontoberfläche eines geparkten Fahrzeuges, falls die Ausrichtung irgendeiner Parklinie nicht erkannt wurde, aber die Ausrichtung der Seitenoberfläche oder Frontoberfläche des neben dem Stellplatz geparkten Fahrzeuges durch die Bildverarbeitung erkannt wurde; und

Einstellen des Zielparkwinkels des betreffenden Fahrzeuges basierend auf der Orientierung des betreffenden Fahrzeuges, wenn das betreffende Fahrzeug zuvor nahe dem Stellplatz anhielt, falls weder die Ausrichtung irgendeiner Parklinie noch die Ausrichtung einer Seitenoberfläche oder Frontoberfläche irgendeines geparkten Fahrzeuges durch die Bildverarbeitung erkannt wurde.

## Revendications

1. Équipement d'aide au stationnement (10) destiné à aider à une opération de mise en stationnement d'un véhicule sujet dans un espace de stationnement, comprenant :

   (a) un moyen (21) d'acquisition d'image destiné à acquérir une image d'une vue sur un côté du véhicule sujet ;
   (b) un moyen de reconnaissance d'image de ligne de stationnement destiné à reconnaître, en traitant l'image acquise par le moyen d'acquisition d'image, la direction d'une ligne de stationnement indiquant l'espace de stationnement ;
   (c) un moyen de fixation d'angle cible de stationnement destiné, en se basant sur la direction de la ligne de stationnement reconnue par le moyen de reconnaissance d'image de ligne de stationnement, à fixer un angle cible de stationnement pour le véhicule sujet, qui représente une orientation cible du véhicule sujet dans l'espace de stationnement ; et
   (d) un moyen de reconnaissance d'image de véhicule stationné destiné, en traitant l'image acquise par le moyen d'acquisition d'image, à reconnaître la direction d'une face latérale ou d'une face frontale d'un véhicule stationné à côté de l'espace de stationnement,
   dans lequel :
   (e) si le moyen de reconnaissance d'image de ligne de stationnement ne reconnaît pas de direction de ligne de stationnement, le moyen de fixation d'angle cible de stationnement fixe l'angle cible de stationnement du véhicule sujet en se basant sur la direction de la face latérale ou de la face frontale du véhicule stationné qui a été reconnue par le moyen de reconnaissance d'image de véhicule stationné ;
   (f) si le moyen de reconnaissance d'image de ligne de stationnement ne reconnaît pas de direction de ligne de stationnement et si le moyen de reconnaissance d'image de véhicule stationné ne reconnaît pas de face latérale ou de face frontale de véhicule stationné, le moyen de fixation d'angle cible de stationnement fixe l'angle cible de stationnement du véhicule sujet en se basant sur l'orientation du véhicule sujet lorsque le véhicule sujet s'est arrêté antérieurement auprès de l'espace de stationnement ;
   (g) le moyen de reconnaissance d'image de ligne de stationnement est constitué pour reconnaître la direction de la ligne de stationnement en traitant l'image acquise par le moyen d'acquisition d'image avant que soit détectée l'intention de stationner du conducteur ; et
   (h) le moyen de reconnaissance d'image de véhicule stationné est constitué pour reconnaître la direction de la face latérale ou de la face frontale du véhicule stationné en traitant l'image acquise par le moyen d'acquisition d'image avant que soit détectée l'intention de stationner du conducteur.

2. Équipement d'aide au stationnement selon la revendication 1, comprenant en outre :

   un moyen (70) d'obtention de données de distance destiné à obtenir des données représentatives de la distance d'une pluralité de points sur une face latérale ou sur une face frontale d'un véhicule stationné à côté de l'espace de stationnement du véhicule sujet,
   dans lequel, si le moyen de reconnaissance d'image de ligne de stationnement ne reconnaît pas de direction de ligne de stationnement, le moyen de fixation d'angle cible de stationnement fixe l'angle cible de stationnement du véhicule sujet en se basant sur la direction de la face frontale ou de la face latérale d'un véhicule stationné qui est calculée en se basant sur les données de distance obtenues par le moyen d'obtention de données de distance.

3. Équipement d'aide au stationnement (10) selon la revendication 1, comprenant en outre :

   un moyen (70) d'obtention de données de distance destiné à obtenir des données représentatives de la distance d'une pluralité de points sur une face latérale ou sur une face frontale d'un véhicule stationné à côté de l'espace de stationnement du véhicule sujet,
   dans lequel, si le moyen de reconnaissance d'image de ligne de stationnement ne reconnaît pas de direction de ligne de stationnement et si le moyen de reconnaissance d'image de véhicule stationné ne reconnaît pas de face latérale ou de face frontale de véhicule stationné, le moyen de fixation d'angle cible de stationnement fixe l'angle cible de stationnement du véhicule sujet en se basant sur la direction de la face frontale ou de la face latérale d'un véhicule stationné qui est calculée en se basant sur les données de distance obtenues par le moyen d'obtention de données de distance.

4. Équipement d'aide au stationnement selon l'une quelconque des revendications 1 à 3, dans lequel l'image acquise par le moyen d'acquisition d'image est une image acquise lorsque le véhicule sujet passe dans une zone sur un côté ou devant un véhicule stationné avant l'espace de stationnement vu dans le sens de circulation du véhicule sujet.

5. Équipement d'aide au stationnement selon l'une quelconque des revendications 1 à 4, dans lequel, lors de stationnement en parallèle, le moyen de fixation d'angle cible de stationnement fixe l'angle cible de stationnement du véhicule sujet pratiquement parallèlement à la direction de la ligne de stationnement reconnue.

6. Équipement d'aide au stationnement selon l'une quelconque des revendications 1 à 4, dans lequel, lors de stationnement perpendiculaire en marche arrière, le moyen de fixation d'angle cible de stationnement fixe l'angle cible de stationnement du véhicule sujet pratiquement perpendiculairement à la direction de la ligne de stationnement reconnue.

7. Équipement d'aide au stationnement selon l'une quelconque des revendications 1 à 6, dans lequel le moyen de reconnaissance d'image de ligne de stationnement extrait, de l'image acquise par le moyen d'acquisition d'image, des bords au niveau desquels la luminosité change brutalement, et si les bords extraits incluent de bords rectilignes qui sont plus longs qu'une longueur prédéterminée et si l'intervalle entre lesdits deux bords est pratiquement égal à une largeur imposée de ligne de stationnement, le moyen de reconnaissance d'image de ligne de stationnement détermine que les deux bords représentent une ligne de stationnement.

8. Équipement d'aide au stationnement (10) destiné à aider à une opération de mise en stationnement d'un véhicule sujet dans un espace de stationnement, comprenant :

un moyen de traitement d'image destiné à traiter une image acquise par une caméra latérale (21) qui capte une image d'une vue sur un côté du véhicule sujet ;
un premier moyen de fixation d'angle cible de stationnement destiné, si la direction d'une ligne de stationnement représentant l'espace de stationnement a été reconnue par le traitement d'image à l'aide du moyen de traitement d'image, à fixer, en se basant sur la ligne de stationnement reconnue, un angle cible de stationnement du véhicule sujet, qui représente une orientation cible du véhicule sujet dans l'espace de stationnement ;
un deuxième moyen de fixation d'angle cible de stationnement destiné, si la direction d'aucune ligne de stationnement n'a été reconnue mais si la direction d'une face latérale ou d'une face frontale d'un véhicule stationné à côté de l'espace de stationnement a été reconnue par le traitement d'image à l'aide du moyen de traitement d'image, à fixer l'angle cible de stationnement du véhicule sujet en se basant sur la direction reconnue de la face latérale ou de la face frontale du véhicule stationné ; et
un troisième moyen de fixation d'angle cible de stationnement destiné, si ni la direction d'aucune ligne de stationnement ni la direction d'aucune face latérale ou face frontale de véhicule stationné n'a été reconnue par le traitement d'image à l'aide du moyen de traitement d'image, à fixer l'angle cible de stationnement du véhicule sujet en se basant sur l'orientation du véhicule sujet lorsque le véhicule sujet s'est arrêté antérieurement auprès de l'espace de stationnement.

9. Procédé d'aide au stationnement (10) destiné à aider à une opération de mise en stationnement d'un véhicule sujet dans un espace de stationnement, comprenant :

le traitement d'une image acquise par une caméra latérale (21) qui capte une image d'une vue sur un côté du véhicule sujet ;
la fixation, si la direction d'une ligne de stationnement représentant l'espace de stationnement a été reconnue par le traitement d'image, en se basant sur la ligne de stationnement reconnue, d'un angle cible de stationnement du véhicule sujet, qui représente une orientation cible du véhicule sujet dans l'espace de stationnement ;
la fixation, si la direction d'aucune ligne de stationnement n'a été reconnue mais si la direction d'une face latérale ou d'une face frontale d'un véhicule stationné à côté de l'espace de stationnement a été reconnue par le traitement d'image, de l'angle cible de stationnement du véhicule sujet en se basant sur la direction reconnue de la face latérale ou de la face frontale du véhicule stationné ; et

la fixation, si ni la direction d'aucune ligne de stationnement ni la direction d'aucune face latérale ou face frontale de véhicule stationné n'a été reconnue par le traitement d'image, de l'angle cible de stationnement du véhicule sujet en se basant sur l'orientation du véhicule sujet lorsque le véhicule sujet s'est arrêté antérieurement auprès de l'espace de stationnement.

# FIG.1

# FIG.2

DETECTION
AREA

VEHICLE
Z (OBJECT)

SUBJECT
VEHICLE

TRAVELING
DIRECTION

EP 2 093 129 B1

# FIG.3

START

S100

PROCESS IMAGE
OF SIDE CAMERA

S102

PARKING
LINE HAS BEEN
RECOGNIZED
?

NO

YES

S104

SET TARGET
PARKING ANGLE
IN PARALLEL TO
PARKING LINE

S106

SIDE FACE
OF PARKED VEHICLE HAS
BEEN RECOGNIZED
?

NO

YES

S108

TARGET PARKING
ANGLE IN PARALLEL TO
EDGE OF SIDE FACE OF
PARKED VEHICLE

S110

SET TARGET
PARKING ANGLE
IN PARALLEL TO
STOP ANGLE

END

# F I G . 4

X1

Y2 SUBJECT VEHICLE

92

PARKING SPACE

Y1 SUBJECT VEHICLE

X2

# F I G . 5

X1

SUBJECT VEHICLE

X2

# FIG.6

# FIG.7

# FIG.8

START

S200

PROCESS IMAGE
OF SIDE CAMERA

S202

PARKING
LINE HAS BEEN
RECOGNIZED
?

NO

YES

S204

SET TARGET
PARKING ANGLE
PERPENDICULAR
TO PARKING LINE

S206

FRONT
FACE OF PARKED
VEHICLE HAS BEEN
RECOGNIZED
?

NO

YES

S208

SET TARGET PARKING
ANGLE PERPENDICULAR
TO EDGE OF FRONT
FACE OF PARKED
VEHICLE

S210

SET TARGET
PARKING ANGLE
PERPENDICULAR
TO STOP ANGLE

END

21

# FIG.9

X1

Y2 SUBJECT VEHICLE

Y1 SUBJECT VEHICLE

X2

94

# FIG.10

# FIG.11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003270344 A
- JP 2007290557 A
- JP 2007290555 A
- JP 2007290556 A